# EUROPEAN PATENT APPLICATION

(11) **EP 2 562 774 A1**
(43) Date of publication of application: **27.02.2013**
(21) Application number: 12181422.2
(22) Date of filing: 22.08.2012
(51) Int. Cl.: H01F 7/128, F15B 13/043, H01F 7/14, H02K 26/00

(54) **Single-stage nozzle flapper torque motor and electrohydraulic valve including a flexible hermetic seal**

(30) Priority: 26.08.2011 US 201113219121
(71) Applicant: Honeywell International Inc., Morristown, NJ 07962-2245 (US)
(72) Inventor: Druhan, David, Morristown, NJ New Jersey 07962-2245 (US); Carter, Dan, Morristown, NJ New Jersey 07962-2245 (US)
(74) Representative: Houghton, Mark Phillip

(57) **Abstract**

A torque motor includes an armature support, a flapper, and a flexible metallic seal. The armature support comprises a base, an armature-flapper support, and a plurality of springs. The armature is coupled to the armature-flapper support. The flapper is coupled to the flapper support and to the armature, and extends through the first and third flapper openings, and extends at least partially into the second flapper opening. The flexible metallic seal surrounds a portion of the flapper, and has a first end, a second end, and a plurality of convolutions between the first end and the second end. The first end is disposed between and hermetically connected to the flapper and the armature, and the second end is disposed within the first opening and hermetically connected to the base.

## Description

### TECHNICAL FIELD

The present invention generally relates to single-stage electrohydraulic valves and the torque motors used therein, and more particularly relates to a torque motor that includes a flexible hermetic seal.

### BACKGROUND

Single-stage electrohydraulic valves (EHVs) may be used in myriad systems and environments. One typical system and environment is the fuel control system on-board a jet-powered aircraft. No matter the specific end-use system and environment, single-stage EHVs typically include a pair of nozzles that are coupled between a pressurized hydraulic fluid source and a hydraulically controlled load. Pressurized hydraulic fluid flow through each of the nozzles, and thus to the hydraulically controlled load, may be controlled via a torque motor.

A typical torque motor that is used with a single-stage EHV includes a plurality of coils, an armature, and a flapper. The coils are controllably energized to control the rotational position of the armature. The flapper is coupled to the armature and extends between the outlets of each of the nozzles in the EHV. By controlling the rotational position of the armature, the position of the flapper relative to each of the nozzle outlets is controlled, and thus fluid pressure and/or flow to the hydraulically controlled device is controlled.

The flapper in the above-described torque motor extends into the flow of hydraulic fluid. Thus, to protect the electrically energized portions of the torque motor from the hydraulic fluid, a suitable liquid-to-air seal is employed. Such seals are typically an elastomeric packing, such as an O-ring. While these seals are generally safe, reliable, and robust, these seals may suffer certain drawbacks. For example, the configuration of the presently known seals and torque motors can result in significant set-up time during manufacture. Moreover, the presently known seals can be prone to calibration shifts and leakage over life.

Hence, there is a need for an improved seal for a torque motor that is used with a single stage EHV. In particular, there is a need for a seal that is relatively less prone to calibration shifts and exhibits relatively less leakage over life, as compared to presently known seals. The present invention addresses at least this need.

### BRIEF SUMMARY

In one embodiment, a torque motor includes an armature support, a flapper, and a flexible metallic seal. The armature support comprises a base, an armature-flapper support, and a plurality of springs. The base has a first flapper opening, and the armature-flapper support has a second flapper opening. The base and armature-flapper support are spaced apart from each other, and the springs are coupled between the base and the armature-flapper support. The armature is coupled to the armature-flapper support and has a third opening. The flapper is coupled to the flapper support and to the armature, and extends through the first and third flapper openings, and extends at least partially into the second flapper opening. The flexible metallic seal surrounds a portion of the flapper, and has a first end, a second end, and a plurality of convolutions between the first end and the second end. The first end is disposed between and hermetically connected to the flapper and the armature, and the second end is disposed within the first opening and hermetically connected to the base.

In another embodiment, a torque motor includes an armature support, an armature, and a flexible nickel-cobalt alloy seal. The armature support comprises a base, an armature-flapper support, and a plurality of springs. The base has a first flapper opening, and the armature-flapper support has a second flapper opening. The base and armature-flapper support are spaced apart from each other, and the springs are coupled between the base and the armature-flapper support. The armature is coupled to the armature-flapper support and has a third opening. The flapper is coupled to the flapper support and to the armature, extends through the first and third flapper openings, and extends at least partially into the second flapper opening. The flexible nickel-cobalt alloy seal surrounds a portion of the flapper. The flexible nickel-cobalt alloy seal has a first end, a second end, and a plurality of convolutions between the first end and the second end. The first end is disposed between and hermetically silver brazed to the flapper and the armature, and the second end is disposed within the first opening and hermetically silver brazed to the base.

In yet another embodiment, an electrohydraulic valve includes a nozzle housing, a first nozzle, a second nozzle, and a torque motor. The nozzle housing includes a first housing inlet, a second housing inlet, and a housing outlet. The first nozzle is mounted within the nozzle housing, and has a first nozzle inlet and a first nozzle outlet. The first nozzle inlet is in fluid communication with the first housing inlet. The second nozzle is mounted within the nozzle housings, and has a second nozzle inlet and a second nozzle outlet. The second nozzle inlet is in fluid communication with the second housing inlet. The torque motor is coupled to the nozzle housing, and is adapted to be selectively energized and is configured, upon being selectively energized, to selectively place the housing outlet in fluid communication with one or more of the first nozzle outlet and the second nozzle outlet. The torque motor includes an armature support, an armature, a flapper, and a flexible metallic seal. The armature support includes a base, an armature-flapper support, and a plurality of springs. The base is coupled to the nozzle housing and has a first flapper opening. The armature-flapper support has a second flapper opening. The base and armature-flapper support are spaced apart from each other, and the springs are coupled between the base and the armature-flapper support. The armature is coupled to the armature-flapper support and has a third opening. The flapper is coupled to the flapper support and to the armature, extends through the first and third flapper openings, and extends at least partially into the second flapper opening. The flexible metallic seal surrounds a portion of the flapper, and has a first end, a second end, and a plurality of convolutions between the first end and the second end. The first end is disposed between and hermetically connected to the flapper and the armature, and the second end is disposed within the first opening and hermetically connected to the base.

Furthermore, other desirable features and characteristics of the torque motor and EHV will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:

FIG. 1 is a cross section view of one example embodiment of a single-stage electrohydraulic valve taken along line 1-1 in FIG. 2;

FIG. 2 is a cross section view of the single-stage electrohydraulic valve of FIG. 1 taken along line 2-2 in FIG. 1;

FIGS. 3 and 4 are close-up, cross section plan views of portions of the single-stage electrohydraulic valve depicted in FIGS. 1 and 2, depicting portions of the torque motor in more detail;

FIGS. 5 and 6 are plan and cross section views, respectively, of portions the torque motor assembly depicted in FIGS. 3 and 4;

FIG. 7 is a plan view of a flexible metal seal that may be used to implement the single-stage electrohydraulic valve depicted in FIGS. 1 and 2;

FIG. 8 is a partial cross section view of the flexible metal seal depicted in FIG. 7; and

FIG. 9 is a close-up, cross section plan view of a portion of the torque motor assembly, depicting a process for connecting the flexible metal seal of FIGS. 7 and 8.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the claimed invention and not to limit the scope of the invention, which is defined by the claims. Furthermore, there is no intention to be bound by any expressed or implied theory presented in the preceding technical field, background, brief summary, or the following detailed description.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. Moreover, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

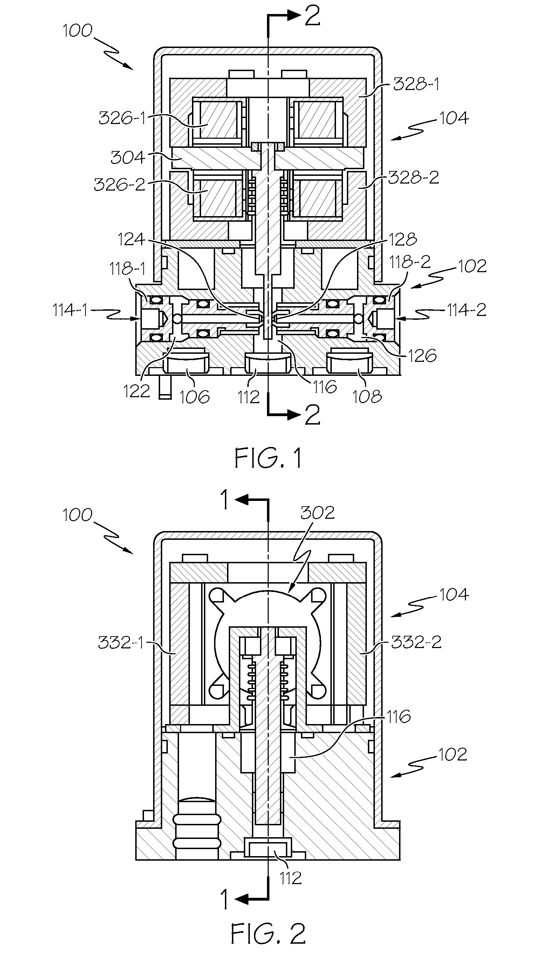

Referring now to FIGS. 1 and 2, different cross section views of one embodiment of a single-stage electrohydraulic valve (EHV) 100 are depicted. The depicted EHV includes a housing 102 and a torque motor 104. The housing 102 includes a first housing inlet 106, a second housing inlet 108, and a housing outlet 112. The first housing inlet 106 and the second housing inlet 108 are each adapted to be coupled in fluid communication with a pressurized fluid source (not illustrated). It will be appreciated that the pressurized fluid medium may vary, and may be any one of numerous gaseous or liquid media. The housing outlet 112 is adapted to be coupled in fluid communication with a pressurized fluid load, such as, for example, a pneumatic or hydraulic valve.

The housing 102 additionally includes two nozzle cavities - a first nozzle cavity 114-1 and a second nozzle cavity 114-2 - and a flapper plenum 116. The first nozzle cavity 114-1 is in fluid communication with the first housing inlet 106 and the flapper plenum 116, and the second nozzle cavity 114-2 is in fluid communication with the second housing inlet 108 and the flapper plenum 116. The flapper plenum 116, which is disposed perpendicular to the first and second nozzle cavities 114-1, 114-2, is in fluid communication with the housing outlet 112.

Two nozzles 118, which are referred to herein as a first nozzle 118-1 and a second nozzle 118-2, are mounted within the housing 106. More specifically, the first nozzle 118-1 is mounted within the first nozzle cavity 114-1, and the second nozzle 118-2 is mounted within the second nozzle cavity 114-2. The first nozzle 118-1 includes a first nozzle inlet 122 and a first nozzle outlet 124, and the second nozzle 118-2 includes a second nozzle inlet 126 and a second nozzle outlet 128. The first nozzle 118-1 is configured such that the first nozzle inlet 122 is in fluid communication with the first housing inlet 106, and the first nozzle outlet 124 is disposed within the flapper plenum 116. The second nozzle 118-2 is configured such that the second nozzle inlet 126 is in fluid communication with the second housing inlet 108, and the second nozzle outlet 128 is disposed within the flapper plenum 116. As will be described momentarily, fluid flow through the first and second nozzles 118-1, 118-2, into the flapper plenum 116, and out the housing outlet 112 is controlled via the torque motor 104, an embodiment of which will now be described.

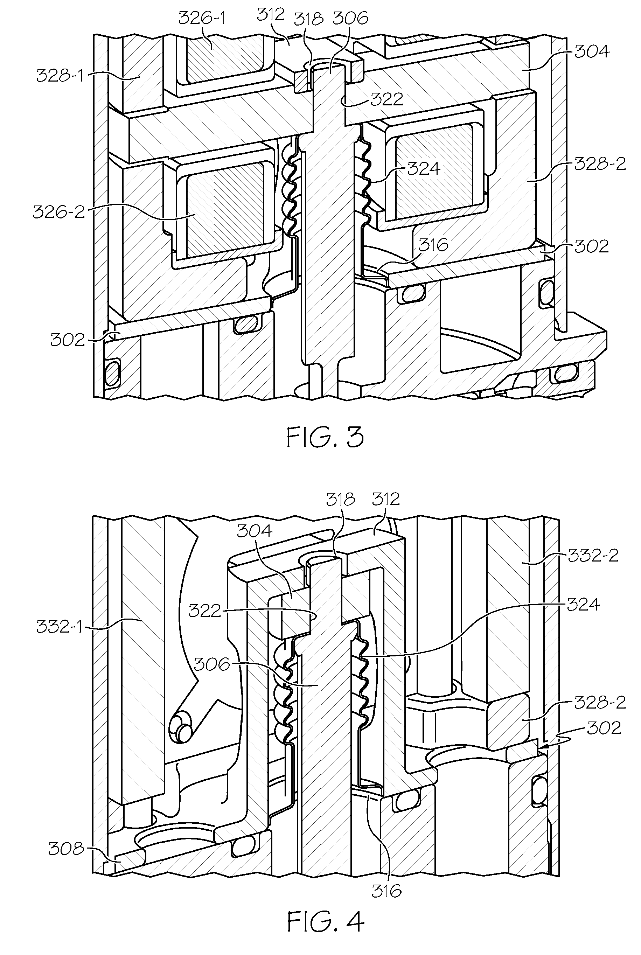

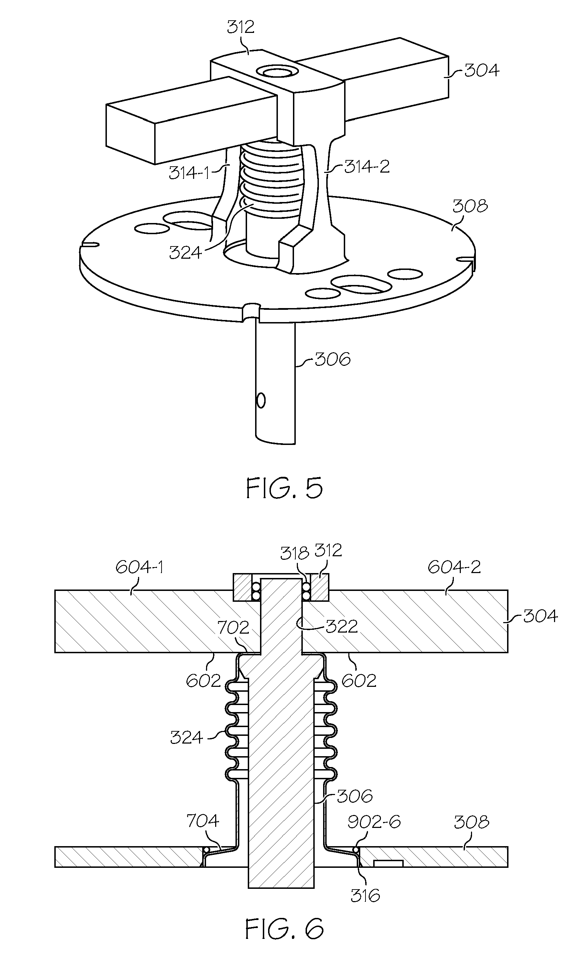

The torque motor 104 is coupled to the housing 102 and is adapted to be selectively energized. The torque motor 104 is configured, upon being selectively energized, to selectively place the housing outlet 112 in fluid communication with either or both of the first nozzle outlet 124 and the second nozzle outlet 128. In the depicted embodiment, and as shown more clearly in FIGS. 3 and 4, the torque motor 104 includes an armature support 302, an armature 304, and a flapper 306. The armature support 302, which is depicted apart from the EHV 100 in FIGS. 5 and 6, includes a base 308, an armature-flapper support 312, and a plurality of springs 314. The base 308 has a first flapper opening 316 formed therein, and the armature-flapper support 312, which is spaced apart from the base 308, has a second flapper opening 318 formed therein. The springs 314, which in the depicted embodiment include a first spring 314-1 and a second spring 314-2, are coupled between the base 308 and the armature-flapper support 312. Although the springs 314 may be variously implemented, in the depicted embodiment the springs 314 are implemented using beam springs.

The armature 304 is coupled to the armature-flapper support 314 and has a third flapper opening 322 formed therein. Although the armature 304 may be variously configured, in the depicted embodiment, and as shown most clearly in FIG. 6, the armature 304 includes a central portion 602, a first arm 604-1, and a second arm 604-2. The central portion 602 has the third flapper opening 322 formed therein, and the first and second arms 604-1, 604-2 extend from the central portion 602 in opposite directions, and are disposed perpendicular to the flapper 306. The armature 304 is preferably formed of any one of numerous magnetically permeable materials.

Returning now to FIGS. 3 and 4, the flapper 306 is coupled to the armature-flapper support 312 and to the armature 304. The flapper 306 extends at least partially into the second flapper opening 318. The flapper 306 also extends through the first and third flapper openings 316, 322, and into the flapper plenum 116 between the first and second nozzle outlets 124, 128 (see FIG. 1). To prevent fluid within the EHV housing 102 from leaking past the flapper 306 and into other portions of the torque motor 104, the torque motor 104 also includes a seal 324, an embodiment of which is described further below. Before doing so, however, various other components of the torque motor 104 will be described.

The depicted torque motor 104 additionally includes plurality of coils 326, a plurality of pole pieces 328, and a plurality of magnets 332 (see FIG. 4). The coils 326 (e.g., first coil 326-1 and second coil 326-2), the pole pieces 328 (e.g., first pole piece 328-1 and second pole piece 328-2), and the magnets 332 (e.g., first magnet 332-1 and second magnet 332-2) are all mounted on the armature support 302 in a well-known manner. When mounted, the first coil 326-1 surrounds a portion of the armature first arm 604-1, and the second coil 326-2 surrounds a portion of the armature second arm 604-2. The first pole piece 328-1 is disposed adjacent the first coil 326-1, and the second pole piece 328-2 is disposed adjacent the second coil 326-2. It will be appreciated that pole pieces 328, like the armature 304, are preferably formed of any one of numerous magnetically permeable materials.

The first magnet 332-1 is coupled between the first pole piece 328-1 and the second pole piece 328-2, and the second magnet 332-2 is spaced apart from the first magnet 332-1, and is also coupled between the first pole piece 328-1 and the second pole piece 328-2. The coils 326 are additionally configured to be coupled to a non-illustrated source of electrical current. As is generally known, the rotational position of the armature 304 can be controlled by controllably energizing the coils 326.

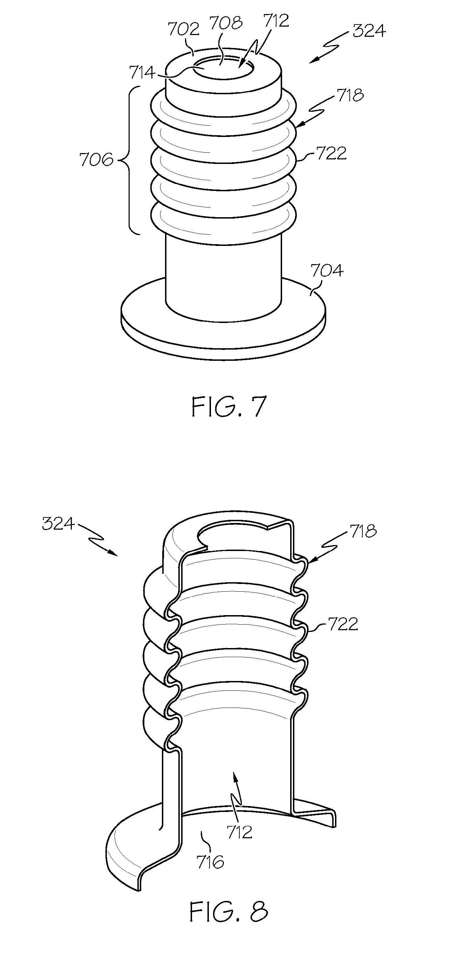

Referring now to FIGS. 7 and 8, an embodiment of the seal 324 is depicted and will now be described. The seal 324 is a flexible metallic seal and includes a first end 702, a second end 704, a central portion 706 disposed between the first and second ends 702, 704, and an inner surface 708 that defines a cavity 712 between the first and second ends 702, 704 and through the central portion 706. The first end 702 has a fourth flapper opening 714 formed therein, and the second end 704 has a fifth flapper opening 716 formed therein. A plurality of convolutions 718 are formed on the central portion 706 between the first and second ends 702, 704. As shown in FIGS. 5 and 6, the flapper 306 extends through the fourth and fifth flapper openings 714, 716, such that the seal 324 surrounds a portion of the flapper 306. The convolutions 718 are circular, have radiused turns 722 and, as shown most clearly in FIG. 8, have a sine wave shape when viewed in vertical cross section. Although the number of convolutions 718 may vary, in the depicted embodiment the seal 324 includes five convolutions.

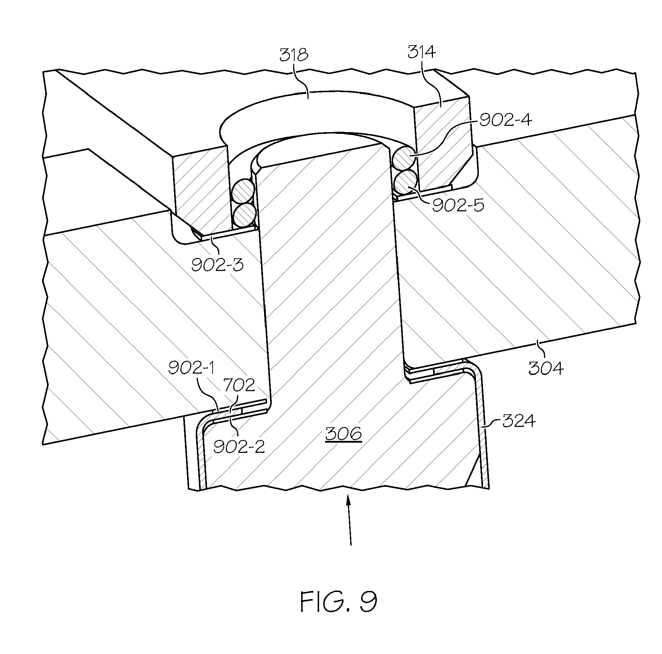

Returning back to FIG. 6, it may be seen that the first end 702 of the seal 324 is disposed between, and is connected to, both the armature 304 and the flapper 306. The second end 704 of the seal 324 is disposed within the first flapper opening 316 and is connected to the base 308. Most preferably, the first end 702 of the seal 324 is silver brazed to the armature 304 and the flapper 306, and the second end 704 of the seal 324 is silver brazed to the base 308. In the depicted embodiment, as shown most clearly in FIG. 9, this is implemented by disposing a first silver braze preform 902-1, in the form of a washer, for example, between the first end 702 of the seal 324 and the armature 304, and a second, substantially identical silver braze preform 902-2 between the first end 702 of the seal 324 (within the cavity 712) and the flapper 306. As FIG. 9 also depicts, a third silver braze preform 902-3, substantially identical to the first and second preforms, may be disposed between the armature-flapper support 314 and the armature 304, and fourth and fifth silver braze preforms 902-4, 902-5, in the form of wires, for example, may be disposed within the second flapper opening 318 and surrounding a portion of the flapper 306 that extends into the second flapper opening 318. With quick reference back to FIG. 6, it is seen that a sixth silver braze preform 902-6, substantially identical in form to the fifth silver braze preform 902-5, is disposed within the first flapper opening 316 to contact a portion of the second end 704 of the seal 324 and the base 308. After the preforms 902 are properly disposed, a brazing process, such as an induction brazing process, is performed to melt the silver braze preforms 902 and provide the hermetic connection. During the brazing process, the flapper 306 is preferably spring-loaded toward the armature-flapper support 314, as depicted using the arrow in FIG. 9.

The seal 324 may comprise any one of numerous suitable metallic materials. In a particular embodiment, however, the seal 324 is formed from a high-strength nickel-cobalt alloy. One presently preferred nickel-cobalt alloy is available from Nicoform, Inc. of Rochester, N.Y., under the trade name NiColoy®, which comprises about 96% nickel and 4% cobalt. The seal 324 may also be formed using any one of numerous known processes including, but not limited to, stamping or hydroforming. In a particular embodiment, however, the seal 324 is formed using an electroforming process. With this process, a metallic alloy, such as the just-mentioned nickel-cobalt alloy, is plated at various thicknesses onto an aluminum mandrel having outer surface contours in the shape of the seal 324. When the desired plating thicknesses are obtained, the mandrel is removed by dissolving it in a chemical solution, leaving only the seal 324. The electroforming process may be followed, if needed or desired, by a stress-relieving heat treatment process, to provide a homogeneous, relatively stress-free seal. When formed in this manner, seal 324 beneficially has high strength, good flexibility, and resistance to high-cycle fatigue.

The flexible metallic seal 324 described herein provides a leak-free barrier between fluid-containing portions and electrical portions of an EHV 100. The flexible metal seal 324 is implemented using materials that metallurgically match surrounding structures, and reduces performance shifts that may occur due to changes in pressure, temperature, and excessive vibrational loads. The material and convoluted shape of the flexible metal seal 324 provide resistance to relatively high internal pressures while maintaining compliance in the direction of motion.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A torque motor, comprising:
an armature support comprising a base, an armature-flapper support, and a plurality of springs, the base having a first flapper opening, the armature-flapper support having a second flapper opening, the base and armature-flapper support spaced apart from each other, the springs coupled between the base and the armature-flapper support;
an armature coupled to the armature-flapper support and having a third opening;
a flapper coupled to the flapper support and to the armature, the flapper extending through the first and third flapper openings, and extending at least partially into the second flapper opening; and
a flexible metallic seal surrounding a portion of the flapper, the flexible metallic seal having a first end, a second end, and a plurality of convolutions between the first end and the second end, the first end disposed between and hermetically connected to the flapper and the armature, the second end disposed within the first opening and hermetically connected to the base.

2. The torque motor of Claim 1, wherein:
the first end of the flexible metallic seal is silver brazed to the flapper and the armature; and
the second end of the flexible metallic seal is silver brazed to the base.

3. The torque motor of Claim 1, wherein the armature includes a central portion, a first arm, and a second arm, the central portion having the third flapper opening formed therein, the first arm and the second arm extending in opposite directions from the central portion and disposed perpendicular to the flapper.

4. The torque motor of Claim 3, further comprising:
a first coil surrounding a portion of the first arm; and
a second coil surrounding a portion of the second arm.

5. The torque motor of Claim 4, further comprising:
a first pole piece disposed adjacent the first coil; and
a second pole piece disposed adjacent the second coil.

6. The torque motor of Claim 5, further comprising:
a first magnet coupled between the first pole piece and the second pole piece; and
a second magnet, spaced apart from the first magnet, and coupled between the first pole piece and the second pole piece.

7. The torque motor of Claim 1, wherein the flexible metallic seal comprises a nickel-cobalt alloy.

8. The torque motor of Claim 1, wherein the plurality of convolutions comprise five convolutions.

9. The torque motor of Claim 1, wherein each of the plurality of springs comprises a beam spring.
